# EUROPEAN PATENT APPLICATION

(11) **EP 3 243 579 A1**
(43) Date of publication of application: **15.11.2017**
(21) Application number: 16169287.6
(22) Date of filing: 12.05.2016
(51) Int. Cl.: B21D 39/02, F16B 11/00

(54) **METHOD OF BONDING PANELS TO A PANEL ASSEMBLY AND PANEL ASSEMBLY**

(71) Applicant: 3M Innovative Properties Company, Saint Paul, MN 55133-3427 (US)
(72) Inventor: Koch, Bernhard, 41464 Neuss (DE); Cura, Elisabeth, 40223 Düsseldorf (DE); Shinozaki, Kotaro, Tokyo 141-8684 (JP)
(74) Representative: Hettstedt, Stephan

(57) **Abstract**

The invention relates to a method of bonding panels together to form a panel assembly, comprising the following steps:
- providing a first panel (10) with a body portion (11) and an end portion (12) and a second panel (20) with a body portion (21) and an end portion (22);
- providing a first structural adhesive film (30) and a second structural adhesive film (31);
- applying the first structural adhesive film (30) on an upper side of the end portion (22) of the second panel (20) and applying the second structural adhesive film (31) on a lower side of the end portion (22) of the second panel (20);
- bringing the two panels (10 and 20) together and folding the end portion (12) of the first panel (10) around the end portion (22) of the second panel (10) such that the end portion (12) extends essentially parallel to the body portion (11) of the first panel (10) thereby enclosing the end portion (22) of the second panel and
- such that the first structural adhesive film (30) is positioned between the upper side of the end portion (22) of the second panel (20) and the end portion (12) of the first panel (10) and that the second structural adhesive film (31) is positioned between the lower side of the end portion (22) of the second panel (20) and the body portion (11) of the first panel (10);
- heating the assembly above the activation temperature of the first (10) and second structural adhesive tape (20);
wherein the first structural adhesive film (10) differs from the second structural adhesive film (20).

## Description

The invention relates to a method of bonding panels to a panel assembly as well as to a structural adhesive film.

Joints, e. g. metal joints, in vehicles may be formed through the use of an adhesive. For example, an adhesive may be used to bond a panel, for example a metal panel of a roof panel to a support structure or chassis of the vehicle. Further, an adhesive may be used in joining two panels, e. g. metal panels, of a vehicle closure panel assembly. Vehicles closure panel assemblies typically comprise an assembly of an outer and an inner panel, e. g. metal panel, whereby a hem structure is formed by folding an edge of an outer metal panel over an edge of the inner panel. Typically, an adhesive is provided there between to bond the two panels together. Further, a sealant typically needs to be applied at the joint of the panels to provide for sufficient corrosion protection. For example, US 6,000,118 discloses the use of a flowable sealant bead between the facing surfaces of two panels, and a thin film of uncured paint-like resin between a flange on an outer panel and the exposed surface of an inner panel. The paint film is cured to a solid impervious condition by a baking operation performed on the completed door panel. US 6,368,008 discloses the use of an adhesive for securing two metal panels together. The edge of the joints is further sealed by a metal coating. WO 2009/071269 discloses an expandable epoxy paste-like adhesive as a sealant for a hem flange. A further hemmed structure is disclosed in US 6,528,176.

Further efforts have been undertaken in order to develop adhesive compositions whereby two panels, e. g. metal panels, in particular an outer and an inner panel of a vehicle closure panel, could be joined with an adhesive without the need for further material for sealing the joint. Thus, it became desirable to develop adhesive systems that provide adequate bonding while also sealing the joint and providing corrosion resistance. A partial solution has been described in e. g. WO 2007/014039, which discloses a thermally expandable and curable epoxy-based precursor of a toughened foamed film comprising a mixture of solid and liquid epoxy resins, and claimed to provide both favourable energy absorbing properties and gap filling properties upon curing.

Without contesting the technical advantages associated with the adhesive compositions and systems disclosed in the art, there is still a need for a high performance structural adhesive film for bonding panels, e. g. metal or composite panels, that combines excellent physical properties such as from stability, flexibility, robustness and handling properties in uncured state; as well as excellent bonding and sealing performance after curing.

In addition, in some instances it is possible that the panels or plates, e. g. a hemmed metal panel assembly, with an uncured and unexpanded structural adhesive film according to the invention in between the two panels passes one or several bath(s) before being put into a curing oven. During this process step, liquid may enter a space between the two panels next to the adhesive film. During the following curing process, when heat gets applied, the liquid may get gaseous and may try to escape. This process might impact the appearance and also the sealing function of the cured structural adhesive film.

Furthermore, car manufacturers prefer that the adhesive film used for connection the two panels of a hem completely covers the outer edge of the outer panel that is hemmed over an edge of the inner panel. In addition, it is required that the adhesive film that covers the outer edge provides a good visual appearance. Therefore, it is an object of the present invention to protect the outer edge of the outer panel with the adhesive it-self. The outer panel edge has to be covered and moreover has to present a good visual appearance.

In view of the above, there is an additional need for an improved structural adhesive film that combines the above mentioned properties with covering the edge of an outer panel and to present a good visual appearance of the expanded film after cure.

In the context of the invention an adhesive film that "covers the outer panel edge" after cure is defined as a film that covers completely the outer edge or a panel. If for example the panel has a thickness of 1 mm, the complete 1 mm edge should be covered by the adhesive film after cure.

In the context of the invention an adhesive film with a "good visual appearance" is defined as a film having a smooth surface that extends essentially linear and essentially parallel to the edge of the panels it is bonding. In addition, to the linear and parallel extension of the film, a film with a good appearance has a smooth surface that is essentially free from irregularities like bubbles or entrapped gas. In other words, a good visual appearance means that the expanded tape after cure has a substantially smooth surface without traces of bubbles.

The present invention provides a method of bonding panels together to form a panel assembly, comprising the following steps:
- providing a first panel with a body portion and an end portion and a second panel with a body portion and an end portion;
- providing a first structural adhesive film and a second structural adhesive film;
- applying the first structural adhesive film on an upper side of the end portion of the second panel and applying the second structural adhesive film on a lower side of the end portion of the second panel;
- bringing the two panels together and folding the end portion of the first panel around the end portion of the second panel such that the end portion extends essentially parallel to the body portion of the first panel thereby enclosing the end portion of the second panel and
- such that the first structural adhesive film is positioned between the upper side of the end portion of the second panel and the end portion of the first panel and that the second structural adhesive film is positioned between the lower side of the end portion of the second panel and the body portion of the first panel;
- heating the assembly above the activation temperature of the first and second structural adhesive tape;
wherein the first structural adhesive film differs from the second structural adhesive film.

A panel assembly according to the invention may be any assembly comprising at least two panels that are fixed to each other. Examples for such panel assemblies are panel assemblies used to build up structures, like for example a vehicle body, such as a car body, a ship body or a train body. Vehicle closure assemblies are another example of assemblies according to the invention. The panels may be made out of metal, plastic or composite materials. The panels to be fixed to each other may be made out of the same or out of different materials.

According to the invention two different structural adhesive films may be used to bond the panels together. One structural adhesive film may be used on one side of a first panel and a different structural adhesive film may be used on the opposing side of the panel. By using two different structural adhesive films to bond panels together, it is possible to adapt each film according to different requirements and thereby provide in total a solution that is able to fulfil more requirements than only one structural adhesive film.

A common way of bonding the panels together is a hem flange bonding step, where an outer end of one panel (outer panel) gets bend or folded around the outer end of another panel (inner panel). In such an example it may be preferred to have an outer panel made out of metal, since metal panels are easy to bend.

A structural adhesive film according to the invention is any kind of adhesive film that can be used to bond panels together and that afterwards provides the required structural stability.

According to one embodiment of the invention the first structural adhesive film may differ from the second structural adhesive film in its thickness, its width, its chemical composition and/or its construction. For example, it may be that the requirements of the structural adhesive film, that gets applied between the upper side of the end portion of the second panel and the end portion of the first panel needs to provide properties like expansion, smoothness, flowability, flexibility in order to be able to seal or cover the outer edge of the end portion of the first panel. These properties can for example be provided by adapting the thickness, the width, the position, the chemical composition and/or the construction of the film. Construction of the film is understood as the information about how the film is build, e. g. if it exists of several layers, what kind of layers, the geometry and thickness of the layers and or surface structures of the film etc.. The above mentioned properties may also be required for the structural adhesive film that gets applied between the lower side of the end portion of the second panel and the body portion of the first panel. Another possibility is that the lower structural adhesive film needs to provide properties like structural strength, crash resistance, toughness, corrosion protection etc. in order to be able to reliably bond the two panels together. These properties may for example be influenced by adapting the thickness, the width, the chemical composition and/or construction of the film. It is also possible that these properties are also required for the upper structural adhesive film. The properties are only mentioned as examples of possible properties. They may be required or not required for the upper and/or the lower structural adhesive film.

The first structural adhesive film and/or the second structural adhesive film may comprise(s) at least one epoxy compound and at least one curing agent. It has been found that a structural adhesive film comprising an epoxy compound as well as an epoxy curing agent provides a good basis for a high performance structural adhesive film that combines excellent physical properties such as form stability, flexibility, robustness and handling properties in uncured state, as well as excellent bonding and sealing performances after curing. In addition, the structural adhesive film of the present invention is particularly suitable for automated handling and application, in particular by fast robotic equipment.

The epoxy compound may have an equivalent weight of less than 250 g/equivalent. Suitable epoxy compounds for use herein will be easily identified by those skilled in the art in the light of the present description. The epoxy compound for use herein is preferably selected from the group of epoxy compounds having an average epoxy functionality, i.e. an average number of polymerizable epoxy groups per molecule, of at least two and, more preferably, from two to four.

Epoxy compounds which are useful in the structural adhesive film are preferably derived from bisphenol A, bisphenol E, bisphenol F, bisphenol S, aliphatic and aromatic amines, such as methylene dianiline and aminophenols, and halogen substituted bisphenol resins, novolacs, aliphatic epoxies, and combinations thereof and/or there between. More preferably, the organic epoxies are selected from the group comprising diglycidyl ethers of bisphenols A and bisphenol F and epoxy novolacs.

These epoxy compounds are generally liquid, or semi-liquid, at room temperature and are frequently also referred to as reactive epoxy thinners or reactive epoxy diluents. These compounds are preferably selected from the group of optionally substituted di- and polyglycidyl ethers of di- and polyphenols or aliphatic or cycloaliphatic hydroxyl compounds. Suitable epoxy compounds for use herein are commercially available from Momentive under tradename Epicote TM 828; from Dow Chemical Co. under tradename DER 331, DER 332 and DER 334; from Resolution Performance Products under tradename Epon® 828; from Polysciences, Inc. under tradename Epon® 825/ 826/ 830 /834/ 863/ 824; from Hexion under tradename Bakelite® EPR 164; from Huntsman under tradename Araldite® GY 259/260; or from Leuna Harze under tradename EPILOX® A 1900.

The amount of epoxy compound in the composition of the structural adhesive film is typically comprised between 30 and 60 wt. %, preferably between 40 and 60 wt. %, more preferably between 50 and 60 wt. %, based on total weight of the composition.

The composition of the structural adhesive films according to the present invention further comprises an epoxy curing agent. Any epoxy curing agent, commonly known in the art, may be used. Suitable epoxy curing agents for use herein are materials that react with the oxirane ring of the organic epoxide to cause substantial cross-linking of the epoxide. These materials contain at least one nucleophilic or electrophilic moiety (such as an active hydrogen atom) that causes the cross-linking reaction to occur. Epoxy curing agents are distinct from epoxide chain extension agents, which primarily become lodged between chains of the organic epoxide and cause little, if any cross-linking. Epoxy curing agents as used herein are also known in the art as epoxy hardeners, epoxide hardeners, catalysts, epoxy curatives, and curatives.

Sometimes, differentiation is made between epoxy curing agents and accelerators which are used to increase the rate of the epoxide curing reaction. Accelerators typically are multifunctional materials which can also be classified as epoxy curing agents. Therefore, in the present specification, no differentiation is made between curing agents and accelerators.

Epoxy curing agents for use herein include those which are conventionally used for curing epoxy resin compositions and forming crosslinked polymer networks. Suitable epoxy curing agents may also be referred to as latent curing agents, which are typically chosen so that they do not react with the epoxy resin until the appropriate processing conditions are applied. Such compounds also include aliphatic and aromatic tertiary amines such as dimethylaminopropylamine and pyridine, which may act as catalysts to generate substantial crosslinking. Further, boron complexes, in particular boron complexes with monoethanolamine, imidazoles such as 2-ethyl-methylimidazole, guanidines such as tetramethyl guanidine, dicyanodiamide (often referred to as DICY), substituted ureas such as toluene diisocyanate urea, and acid anhydrides such as the 4-methyltetrahydroxyphthalic acid anhydride, 3-methyltetrahydroxyphthalic acid anhydride and methylnorbornenephthalic acid anhydride, may be employed. Still other useful epoxy curing agents include polyamines, mercaptans and phenols.

Other epoxy curing agents for use herein include encapsulated amines, Lewis acids salts, transition metal complexes and molecular sieves. Preferably, the epoxy curing agent is selected from the group consisting of amines, acid anhydrides, guanidines, dicyandiamide and mixtures thereof. More preferably, the epoxy curing agent contains dicyandiamide. Suitable epoxy curing agents for use herein are commercially available from Air Products under tradename Amicure® CG-1200.

The first structural adhesive film and/or the second structural adhesive film may further comprise(s) a thermoplastic resin and optionally a toughening agent. In a preferred aspect, thermoplastic resin for use herein may have a softening point comprised between 30 °C and 140 °C, preferably between 80 °C and 100 °C, more preferably between 85 °C and 95 °C. Suitable thermoplastic resins for use herein will be easily identified by those skilled in the art, in the light of the present description. Suitable thermoplastic resins for use herein are preferably selected from the group consisting of polyether thermoplastic resins, polypropylene thermoplastic resins, polyvinyl chloride thermoplastic resins, polyester thermoplastic resins, polycaprolactone thermoplastic resins, polystyrene thermoplastic resins, polycarbonate thermoplastic resins, polyamide thermoplastic resins, and any combinations of mixtures thereof. The amount of thermoplastic resin in the composition of the structural adhesive film is typically comprised between 10 and 50 wt. %, preferably between 15 and 30 wt. %, more preferably between 20 and 30 wt. %, based on total weight of the composition.

Any toughening agent, commonly known in the art, may be used in the composition of the structural adhesive film of the invention. The toughening agents are preferably selected from a group comprising core-shell toughening agents, CTBNs (carboxyl and/or nitrile terminated butadiene/nitrile rubbers) and high molecular weight amine terminated polytetramethylene oxide, or dimer acid functionalised epoxy. The toughening agents are preferably selected from a group comprising core-shell toughening agents, like Paraloid(TM) 2650J from Dow, Paraloid™ 2690 supplier Dow, Kane Ace(TM) M521, Kane Ace(TM) M711, Kane Ace(TM) M721, Kane Ace(TM) MX 257 Kane Ace(TM) MX153 from Kaneka, or Clearstrength ™ products from Arkema. The core shell is based on methacrylate-butadiene-styrene copolymers or methacrylate-butadiene copolymers (MBS). Alternative core shell material are acrylic impact modifiers from Arkema, with products from the trade name Durastrengths. CTBNs (carboxyl and/or nitrile terminated butadiene/nitrile rubbers) and high molecular weight amine terminated polytetramethylene oxide, or dimer acid functionalised epoxy. The toughening agent may also be carboxyl terminated butadiene acrylonitrile.

The first structural adhesive film and/or the second structural adhesive film further comprise(s) a thermoplastic resin and at least one component comprising at least one epoxy moiety and at least one linear or branched alkyl group and/or at least one mineral filler, wherein the at least one mineral filler is capable of absorbing water.

The at least one mineral filler may be selected from the group consisting of metal oxides and metal hydroxides, preferably selected from the group of CaO, BaO, K₂O, Li₂O, Na₂O, SiO₂, SrO, MgO and mixtures thereof. The mineral filler may be CaO and/or SiO₂, and/or talc (hydrated magnesium silicate), and/or CaCO₃ preferably a blend comprising CaO and SiO₂.

The at least one adhesive layer may also comprise at least one further filler selected from the list of carbon black, graphite, a mineral carbon source, glass beads, glass chips, metal chips, metal flakes, preferably graphite glass beads, glass chips, more preferably graphite, even more preferably graphite flakes. The additional fillers may comprise thermally expandable graphite, and more preferably thermally expandable graphite flakes.

The first structural adhesive film and/or the second structural adhesive film may further comprise(s) at least one acrylic polymer. As the acrylic polymers, acrylic copolymer which including nitrogen containing vinyl monomer and alkyl acrylic ester monomer may be used. The nitrogen containing vinyl monomer may be preferably selected from a group comprising dimethyl acryl amide, N-vinyl pyrrolidone, N-vinyl caprolactam and Acryloyl morpholine. The alkyl acrylic ester may be preferably selected from a group comprising butyl acrylate, 2-ethyl hexyl acrylate and iso-octyl acrylate.

The first structural adhesive film and/or the second structural adhesive film may further comprise(s) a toughening agent and/or a blowing agent. Any blowing agents, commonly known in the art, may be used in the composition of the structural adhesive film of the invention. By including a blowing agent in the composition of the structural adhesive film, the structural adhesive film becomes heat expandable and may be referred to as an expandable structural adhesive film. Accordingly, by heating, for example during the heating to cause curing of the adhesive sheet, the structural adhesive film expands which helps sealing of any gap in the panel joint. The one or more blowing agents may be selected from the group of non-encapsulated and/or encapsulated blowing agents.

The composition of the structural adhesive films according to the invention may optionally comprise further components, additives or agents. Other optional ingredients that may advantageously be incorporated into the composition include wetting agents such as those selected from the group consisting of titanates, silianes, zironates, zircoaluminates, phosphoric ester(s) and mixtures thereof. The wetting agent improves the mixability and processability of the composition and can also enhance the composition's handling characteristics. The composition of the adhesive layer according to the invention may be a thermosettable composition.

Other optional ingredients which may be used include additives, agents or performance modifiers such as e. g. flame retardants, impact modifiers, heat stabilizers, colorants, processing aids, lubricants, and reinforcing agents.

The composition of the adhesive layer may also comprise one or more fillers which may be used to regulate rheological properties of the precursor and adjust its viscosity to improve and adjust its processability for specific applications. Preferred fillers for use herein are selected from the group consisting of filler particles, microspheres, expandable microspheres, preferably pentane filled expandable microspheres or gaseous cavities, glass beads, glass microspheres, hydrophobic silica type fillers, hydrophilic silica type fillers, fumed silica, fibers, electrically and/or thermally conducting particles, nano-particles, and any combinations thereof.

It is also possible that the adhesive layer according to the invention comprises a melt-flowable composition that comprises an epoxy resin and a thermoplastic polymer having one or more functional groups capable of reacting with an epoxy material. The thermoplastic polymer may be a semi-crystalline polymer or an amorphous polymer having a glass transition temperature above -30 °C according to DSC measurement (DSC, dynamic scanning calorimetry, DIN EN ISO 11357-1). The thermoplastic polymer may comprise a polyvinylacetal or a polyester. It may also comprise a polyvinylbutyral. The melt-flowable and composition may further comprise an acrylic polymer.

It is also possible that the first structural adhesive film and/or the second structural adhesive film according to the invention comprise(s) a mixture of a first and second epoxy compound and an epoxy curing agent, wherein the first epoxy compound has a weight average molecular weight of at least 1000 g/mol and has an amount of epoxy groups of between 5 and 10 mole % and the second epoxy compound has a weight average molecular weight of not more than 400 g/mol and wherein the weight ratio of first to second epoxy compound is between 0.8 and 4.

The structural adhesive films according to the invention may be readily prepared by a number of techniques. For example, the various components may be added under ambient conditions to a suitable internal mixing vessel, such as a Mogul mixer. The mixing temperature is not critical and the mixing of the first and second epoxy components and the optimal toughening agent component is typically performed at a temperature of 80 - 85 °C. When the epoxy curing agent component and the optional blowing agent component is added the temperature may preferably be decreased to not more than 70 °C. Mixing is continued until the components form a homogenous mixture, after which time the composition is removed from the mixer.

Due to their excellent processability the composition can be processed as a film by conventional application equipment such as extruders or hot-melt coaters. The composition may be processed as a self-supporting film or may alternatively be coated/laminate onto a suitable liner, such as e. g. a siliconized liner. The structural adhesive film of the invention may be applied to various substrates such as, for example metals (for example, Al, Al alloys, titanium or stainless steel) or other substrates comprising, for example, glass boron, carbon, Kevlar fibers, epoxy phenols, cyanate esters or polyester matrices.

The structural adhesive films according to the invention are typically a soft conformable film, and may or may not be tacky at room temperature. Prior to curing, the structural adhesive film is preferably elastic, deformable and/or drapable so that it can be applied to curved surfaces and assume any two-dimensional shape. The thickness of the structural adhesive film material may vary widely.

The first structural adhesive film and/or the second structural adhesive film may further comprise(s) at least one layer of porous structure. A structural adhesive film with a layer with a porous structure may provide the additional advantage of improving the stability of the structural adhesive film, which leads to more robust covering of the outer edge of one panel to be bonded. The porous layer may also provide a conformability to the structural adhesive film, which may be for example used to pre-form the structural adhesive film, before it is applied to any one of the panels and thereby it is much more suitable for automated handling and application, in particular by fast robotic equipment. Finally the porosity of the layer may help the above mentioned gas that may be generated during the curing step, to escape out of a space between two panels next to the film. The porosity or the layer may also help to absorb the adhesive from the adhesive layer during the curing process. Each one of these properties of the layer may lead to a good covering of the outer edge of the panel and to a good appearance of the tape after curing. The layer with a porous structure may for example be a porous carrier layer.

The porous layer may be a malleable scrim or mesh with a lower density. The lower density leads to a porosity of the layer with the above mentioned advantages. The porous layer may also be a wipe, e. g. a spunlaced wipe. Spunlacing is also called hydroentanglement. It is a bonding process for wet or dry fibrous webs made by either carding, air-laying or wet-laying, the resulting bonded fabric being a non-woven. It uses fine, high pressure jets of water which penetrate the web, if transported by a belt or wire, hit the conveyor belt or conveyor wire and bounce back causing the fibers to entangle with each other. This process can also be considered as a two-dimensional equivalent of spinning fibers into yarns prior to weaving. In other words the hydroentangled bonding technology is a system in which water is emitted under high pressure and velocity from closely positioned nozzles onto a web of loose fibers. The intensity of the water stream and the pattern of the supporting drum or belt entangle, spin and curl the web's fibers about one another. The entangling of the fibers and the friction between the web's fibers yields a cohesive web. The water pressure has a direct bearing on the strength of the web, and very high pressures not only entangle but can also split fibers into micro- and nano-fibers which may give the resulting hydroentangled non-woven a leather like or even silky texture. This type of non-woven can be as strong and tough as woven fabrics made out of the same fibers.

Other preferred properties of the porous layer may be a high softness and flexibility. These properties help to apply the film in an easy manner, even in areas with more complex geometries. Another preferred property of the porous layer is a good drapability. A further requirement of a porous layer according to the invention is a sufficient strength and the requirement to withstand the temperatures in a curing oven, which may for example be up to 180 °C, e. g. 120 °C.

According to one embodiment of the method according to the invention the first structural adhesive film and the second structural adhesive film get applied simultaneously on the inner panel. This may provide a time saving advantage in the production process of the panel assemblies. In certain situations it is also possible to first apply one structural adhesive film and afterwards apply the second structural adhesive film on the inner panel. It is also possible to apply both films simultaneously on the outer panel. And it is possible to apply first a first structural adhesive film on the outer panel and then apply a second structural adhesive film on the outer panel. Application of one structural adhesive film on the inner panel and of the second structural adhesive film on the outer panel is also possible.

The application may be fully automated and may include application with air (hot or cool) or application with rollers. It is also possible to include other means of heating like induction heating.

The invention also provides a system for bonding two panels together by using the method described above, wherein the system comprises a first structural adhesive film, a second structural adhesive film, wherein the two structural adhesive films differ from each other.

And the invention provides a panel assembly comprising:
- a first panel with a body portion and an end portion and a second panel with a body portion and an end portion;
- a first structural adhesive film and a second structural adhesive film;
- wherein the end portion of the first panel is folded around the end portion of the second panel such that the end portion extends essentially parallel to the body portion of the first panel thereby enclosing the end portion of the second panel and
- wherein the first structural adhesive film is positioned between the upper side of the end portion of the second panel and the end portion of the first panel and that the second structural adhesive film is positioned between the lower side of the end portion of the second panel and the body portion of the first pane;
wherein the first structural adhesive film differs from the second structural adhesive film.

The invention will now be described in more detail with reference to the following Figures exemplifying particular embodiments of the invention:
- Fig. 1: is a three dimensional view of a structural adhesive film used in the method according to the invention;
- Fig. 2: is a cross-sectional view of the film shown in Figure 1 along the line II-II;
- Fig. 3: is a three dimensional view of a structural adhesive film used in the method according to the invention;
- Fig. 4: is a cross-sectional view of the film shown in Figure 3 along the line IV-IV in Film;
- Fig. 5: is a cross-sectional view of a first panel with a first structural adhesive film;
- Fig. 6: is a cross-sectional view of the first panel of Figure 5 with a second structural adhesive film;
- Fig. 7: is a cross-sectional view of the first panel of Figures 5 and 6 with a second panel next to it;
- Fig. 8: is a cross-sectional view of the first panel of Figures 5 to 7 with an end of the second panel bend around an end of the first panel;
- Fig. 9 to 11: are cross-sectional views of further a panel assemblies according to the invention with two different structural adhesive films before cure and
- Fig. 12: is a cross-sectional view of a panel assembly with two different structural adhesive films after cure.

Herein below various embodiments of the present invention are described and shown in the drawings wherein like elements are provided with the same reference numbers.

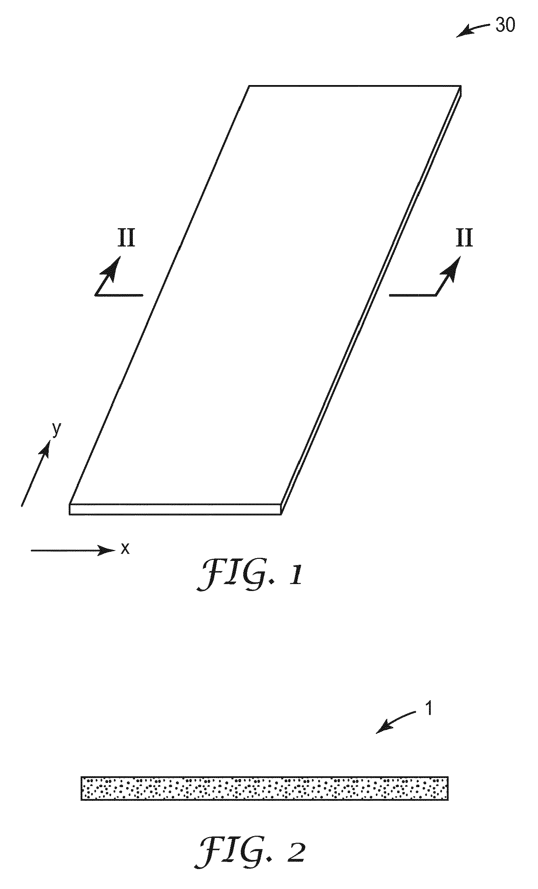

Figure 1 is a three-dimensional view of a structural adhesive film 30. The film 30 has an extension in its longitudinal direction y that is longer than its extension in its cross direction x. The structural adhesive film 30 may for example be provided as a film on a roll. Or it may be provided as a pre-cut die-cut. The structural adhesive film 30 comprises one layer of polymeric material. Figure 2 is a cross sectional view of the film shown in Figure 1 along the line II-II. One layer of an adhesive, e. g. a layer of a polymeric material, can be seen in this Figure.

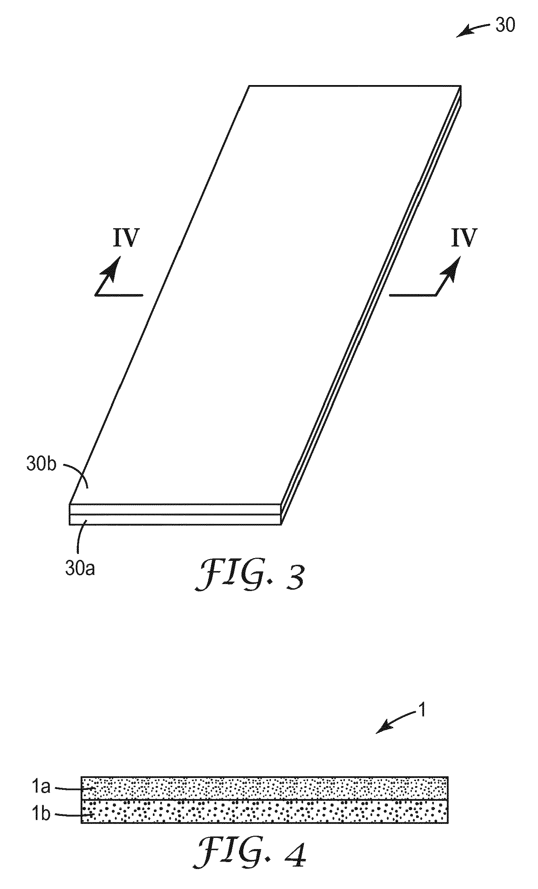

Figure 3 is a three-dimensional view of a structural adhesive film 30. The film 30 has an extension in its longitudinal direction y that is longer than its extension in its cross direction x. The structural adhesive film 30 may for example be provided as a film on a roll. Or it may be provided as a pre-cut die-cut. The structural adhesive film 30 comprises two layers 30a and 30b. The layers may be two layers of different or the same polymeric material. It is also possible that one of the layers comprise a porous material like a net or scrim or the like. Figure 4 is a cross sectional view of the film shown in Figure 1 along the line IV-IV. The two layers 30a and 30b are positioned on top of each other and extend parallel to each other.

The following Figures show the single steps of one embodiment of a method according to the invention.

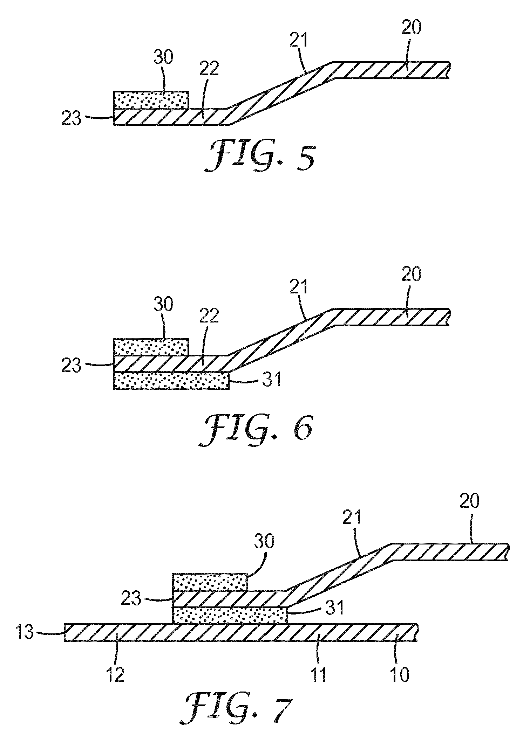

Figure 5 is a cross-sectional view of an inner panel (second panel) 20 that provides a body portion 21 and an end portion 22 with an edge 23, wherein the edge 23 extends perpendicular to the extension of the end portion 22. The inner panel 20 may be for example a metal panel, a plastic panel or a panel made out of a composite material. It may for example be used to make a panel assembly for a closure or a door for a vehicle. A structural adhesive film 30 - as shown in Figure 1 and 2 - is applied on the upper side of the end portion 22 of the inner panel 20. The adhesive film extends from the edge 23 towards the body portion 21 of the inner panel 20.

Figure 6 is a cross-sectional view of the inner panel 20 of Figure 5 with the first structural adhesive film 30 applied on the upper side of the end portion 22. A second structural adhesive film 31 is applied on the lower side of the end portion 22 of the panel 20. The adhesive film extends from the edge 23 towards the body portion 21 of the panel 20. The two films 30 and 31 extend essentially parallel to each other on both sides of the end portion 22 of the panel 20. The first structural adhesive film 30 differs from the second structural adhesive film 31 in its extension in the cross direction. The extension of the first structural adhesive film 30 is shorter than the extension of the second structural adhesive film 31. The first structural adhesive film 30 and the second structural adhesive film 31 may also vary in other properties from each other like in their thickness, their chemical composition and/or their construction. This will be described in more detail below.

Figure 7 is a cross-sectional view of the inner panel 20 of Figure 6 with the first 30 and the second structural adhesive film 31 applied to its end portion 22. Figure 7 also shows a further outer panel (first panel) 10 with a body portion 11 and an end portion 12. The outer panel 10 may be for example a metal panel, a plastic panel or a panel made out of a composite material. For a hem flange connection the outer panel may preferably be a metal panel. The end portion 12 of the outer panel 10 ends in and edge 13, which extends perpendicular to the extension of the end portion 12. The outer panel 10 is brought in contact with the second structural adhesive film 31 on the lower side of the end portion 22 of the inner panel 20 such that the end portion 12 of the outer panel 10 extends over the edge 23 of the end portion 22 of the inner panel 20 with the structural adhesive films 30 and 31 on both sides.

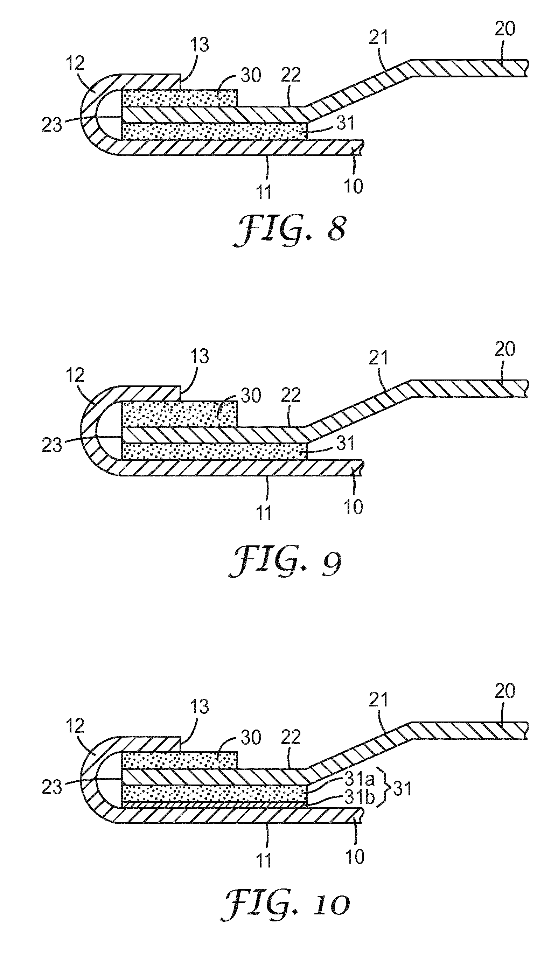

Figure 8 is a cross-sectional view of the two panels (outer and inner or first and second) 10 and 20 with the two structural adhesive films 30 and 31. Figure 8 differs from Figure 7 in that the end portion 12 of the outer panel 1 is bend or folded around the end portion 22 of the inner panel 20 to build a so-called hem flange connection between the two panels.

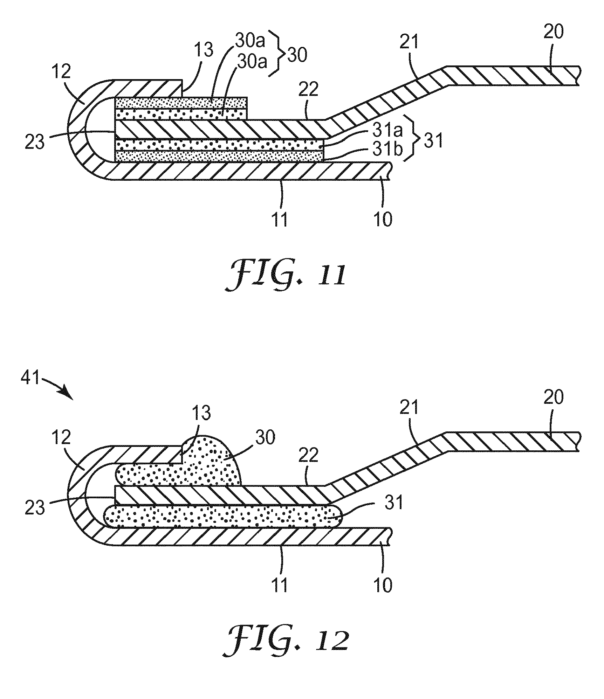

In order to reliably seal the hem flange connection it may be required that after curing of the structural adhesive films 30 and 31 the outer edge 13 of the outer panel 10 is completely covered by structural adhesive film. In order to fulfil this requirement, the first structural adhesive film 30 needs to expand during cure such that it extends covers the entire outer edge 13. This will be described in detail with reference to Figure 12.

Figure 9 is a cross-sectional view of two panels (outer and inner) 10 and 20 with two different structural adhesive films 30 and 31. The structural adhesive films 30 and 31 not only differ in their extension in the cross direction. They also differ in their thickness. The first structural adhesive film 30 is thicker than the second structural adhesive film 31. This may for example be necessary for example in order to reliably fulfil the above described requirements of covering the outer edge 13.

Figure 10 is a cross-sectional view of the two panels (outer and inner or first and second) 10 and 20 with two different structural adhesive films 30 and 31. In this embodiment the first structural adhesive film 30 is a one layer film and the second structural adhesive film 31 provides two layers 31 a and 31 b. Figure 11 is a further cross-sectional view of two panels (outer and inner) 10 and 20 with two different structural adhesive films 30 and 31. Both structural adhesive films provide two layers. The first structural adhesive film 30 provides a first layer 30a and a second layer 30b. The second structural adhesive film 31 provides a first layer 31 a and a second layer 31 b.

Figure 12 shows a panel assembly with an outer panel 10 and an inner panel 20 with two different structural adhesive films 30 and 31 after curing the structural adhesive films, wherein the outer 10 and the inner panel 20 are connected over a hem flange connection. During the curing process the structural adhesive films 30 and 31 expands. Therefore the volume of the structural adhesive film 30 and 31 is bigger after cure as before. The shape of the first structural adhesive film 30 changed such that it covers the entire edge 13 of the outer panel 10. The structural adhesive 31 expanded a little bit out of the gap between the outer 10 and the inner panel 20. In Figure 12 it is not indicated if and how many layers the structural adhesive films provide. All the above mentioned options are possible and others as well, like for example a first structural adhesive film 30 and/or a second structural adhesive film 31 with three layers etc.

## Claims

1. Method of bonding panels together to form a panel assembly, comprising the following steps:
- providing a first panel (10) with a body portion (11) and an end portion (12) and a second panel (20) with a body portion (21) and an end portion (22);
- providing a first structural adhesive film (30) and a second structural adhesive film (31);
- applying the first structural adhesive film (30) on an upper side of the end portion (22) of the second panel (20) and applying the second structural adhesive film (31) on a lower side of the end portion (22) of the second panel (20);
- bringing the two panels (10 and 20) together and folding the end portion (12) of the first panel (10) around the end portion (22) of the second panel (10) such that the end portion (12) extends essentially parallel to the body portion (11) of the first panel (10) thereby enclosing the end portion (22) of the second panel and
- such that the first structural adhesive film (30) is positioned between the upper side of the end portion (22) of the second panel (20) and the end portion (12) of the first panel (10) and that the second structural adhesive film (31) is positioned between the lower side of the end portion (22) of the second panel (20) and the body portion (11) of the first panel (10);
- heating the assembly above the activation temperature of the first (10) and second structural adhesive tape (20);
wherein the first structural adhesive film (10) differs from the second structural adhesive film (20).

2. Method according to claim 1, wherein the first structural adhesive film (10) differs from the second structural adhesive film (20) in its thickness, its width, its chemical composition and/or its construction.

3. Method according to claim 1 or 2, wherein the first structural adhesive film (30) and/or the second structural adhesive film (31) comprise(s) at least one epoxy compound and at least one curing agent.

4. Method according to any of the preceding claims, wherein the first structural adhesive film (30) and/or the second structural adhesive film (31) further comprise(s) a thermoplastic resin and optionally a toughening agent.

5. Method according to any of the preceding claims, wherein the first structural adhesive film (30) and/or the second structural adhesive film (31) further comprise(s) a thermoplastic resin and at least one component comprising at least one epoxy moiety and at least one linear or branched alkyl group and/or at least one mineral filler, wherein the at least one mineral filler is capable of absorbing water.

6. Method according to any of the preceding claims, wherein the first structural adhesive film (30) and/or the second structural adhesive film further comprise(s) at least one acrylic polymer.

7. Method according to any of the preceding claims, wherein the first structural adhesive film (30) and/or the second structural adhesive film further comprise(s) a toughening agent and/or a blowing agent.

8. Method according to any of the preceding claims, wherein the first structural adhesive film (30) and/or the second structural adhesive film further comprise(s) at least one layer of porous structure.

9. Method according to any of the preceding claims, wherein the first structural adhesive film (30) and/or the second structural adhesive film are tacky at room temperature.

10. Method according to any of the preceding claims, wherein the first structural adhesive film (30) and/or the second structural adhesive film are elastic at room temperature.

11. Method according to any of the preceding claims, wherein the first structural adhesive film (30) and the second structural adhesive film get applied simultaneously.

12. System for bonding two panels together by using the method according to any of the claims 1 to 11, wherein the system comprises
- a first structural adhesive film;
- a second structural adhesive film;
- wherein the first structural adhesive film differs from the second structural adhesive film.

13. Panel assembly comprising:
- a first panel (10) with a body portion (11) and an end portion (12) and a second panel (20) with a body portion (21) and an end portion (22);
- a first structural adhesive film (30) and a second structural adhesive film (31);
- wherein the end portion (12) of the first panel is folded around the end portion (22) of the second panel (10) such that the end portion (12) extends essentially parallel to the body portion (11) of the first panel (10) thereby enclosing the end portion (22) of the second panel and
- wherein the first structural adhesive film (30) is positioned between the upper side of the end portion (22) of the second panel (20) and the end portion (12) of the first panel (10) and that the second structural adhesive film (31) is positioned between the lower side of the end portion (22) of the second panel (20) and the body portion (11) of the first panel (10);
wherein the first structural adhesive film (10) differs from the second structural adhesive film (20).
